# EUROPÄISCHE PATENTANMELDUNG

(11) **EP 2 077 398 A1**
(43) Veröffentlichungstag der Anmeldung: **08.07.2009**
(21) Anmeldenummer: 08000061.5
(22) Anmeldetag: 03.01.2008
(51) Int. Cl.: F16D 13/64

(54) **Lamellenkupplung/-bremse**

(71) Anmelder: Hoerbiger Antriebstechnik GmbH, 86956 Schongau (DE); Technische Universität Dresden, 01069 Dresden (DE)
(72) Erfinder: Beitelschmidt, Michael, 01219 Dresden (DE); Nickel, Falk, 86925 Fuchstal (DE); Ruprecht, Georg, 87640 Biessenhofen (DE)
(74) Vertreter: Schmitz, Hans-Werner

(57) **Zusammenfassung**

Die Erfindung betrifft eine Lamellenkupplung (1) mit einem Lamellenpaket (7), das an einem Lamellenträger (1A, 1B) angeordnet ist und eine Mehrzahl von Lamellen (12, 13) aufweist, wobei die Lamellen (12, 13) unterschiedliche Verdrehsteifigkeiten aufweisen.

## Beschreibung

Die Erfindung betrifft eine Lamellenkupplung/-bremse gemäß dem Oberbegriff des Anspruches 1.

Eine gattungsgemäße Lamellenkupplung ist aus der DE 199 37 440 C1 bekannt.

Es ist daher Aufgabe der vorliegenden Erfindung, eine Lamellenkupplung/-bremse der im Oberbegriff des Anspruches 1 angegebenen Art zu schaffen, die eine Übertragung von typischerweise breitbandigen Anregungen (Schwingungen) aus dem Reibkontakt auf die drehmomentübertragenden Teile der Kupplung bzw. Bremse und darüber hinaus insoweit zu verhindern möglich macht, so dass Schwingungsprobleme, wie Geräusche oder Vibrationen, verhindert werden können.

Die Lösung dieser Aufgabe erfolgt durch die Merkmale des Anspruchs 1.

Die Unteransprüche haben vorteilhafte Weiterbildungen der Erfindung zum Inhalt.

Erfindungsgemäß wird somit eine Paarung von Lamellen mit unterschiedlichen Verdrehsteifigkeiten zwischen der Reibfläche und der Drehmomentübertragungsstelle (Verzahnung, Nocke usw. der Lamelle) in einer Lamellenkupplung oder einer Lamellenbremse gelehrt, um eine positive Beeinflussung in Form einer Dämpfung der Schwingungsübertragungen aus dem Reibkontakt auf die drehmomentübertragenden Bauteile zu erreichen. Die drehmomentübertragenden Bauteile sind hauptsächlich die Welle und die Nabe.

Mit anderen Worten werden die zwangsläufig immer auftretenden breitbandigen Anregungen im Bereich der Lamellen ausgeglichen, damit sie nicht auf die drehmomentübertragenden Teile übertragen werden, was neben Beschädigungen dieser Teile auch zu erheblichen Geräuschentwicklungen führen kann.

Hierbei ist es möglich, Lamellen mit verminderter Drehsteifigkeit und mit unverminderter Drehsteifigkeit abwechselnd im Lamellenpaket anzuordnen. Alternativ ist es auch möglich, die Lamellen mit verminderter Drehsteifigkeit und diejenigen mit unverminderter Drehsteifigkeit jeweils zu bündeln.

Ferner können sowohl die Innenlamellen wie auch die Außenlamellen in ihrer Verdrehsteifigkeit vermindert werden. Dabei können auch mehr als zwei unterschiedliche Verdrehsteifigkeiten umgesetzt werden.

Mit anderen Worten ist die Anordnung der mit den unterschiedlichen Verdrehsteifigkeiten versehenen Lamellen im Lamellenpaket grundsätzlich beliebig und kann an die jeweiligen Einbaubedingungen und Belastungen der Kupplung bzw. Bremse individuell angepasst werden.

Die Realisierung unterschiedlicher Verdrehsteifigkeiten der Innen- und/oder Außenlamellen kann auf unterschiedliche Arten erreicht werden. Im Folgenden einige Beispiele. So ist es möglich das vollflächige Material mit Ausnehmungen zu versehen. Es ist auch möglich durch Materialzugabe, z.B. Aufschweißen, Kleben, Schrauben, etc. diesen Effekt zu erreichen. Auch kann die Variation durch Umformung erreicht werden.

Weitere Einzelheiten, Vorteile und Merkmale der vorliegenden Erfindung ergeben sich aus nachfolgender Beschreibung eines Ausführungsbeispiels anhand der beigefügten Zeichnung. Es zeigt:
- Fig. 1: einen Querschnitt durch eine erste Ausführungsform der Erfindung in Form einer Lamellenkupplung,
- Fig. 2: eine Draufsicht auf eine in ihrer Verdrehsteifigkeit (Torsionssteifigkeit) verminderte Lamelle, und
- Fig. 3: eine der Fig. 2 entsprechende Darstellung einer in ihrer Verdrehsteifigkeit (Torsionssteifigkeit) nicht verminderten Lamelle.

### Nachfolgend wird die Erfindung am Beispiel einer Lamellenkupplung 1 erläutert:

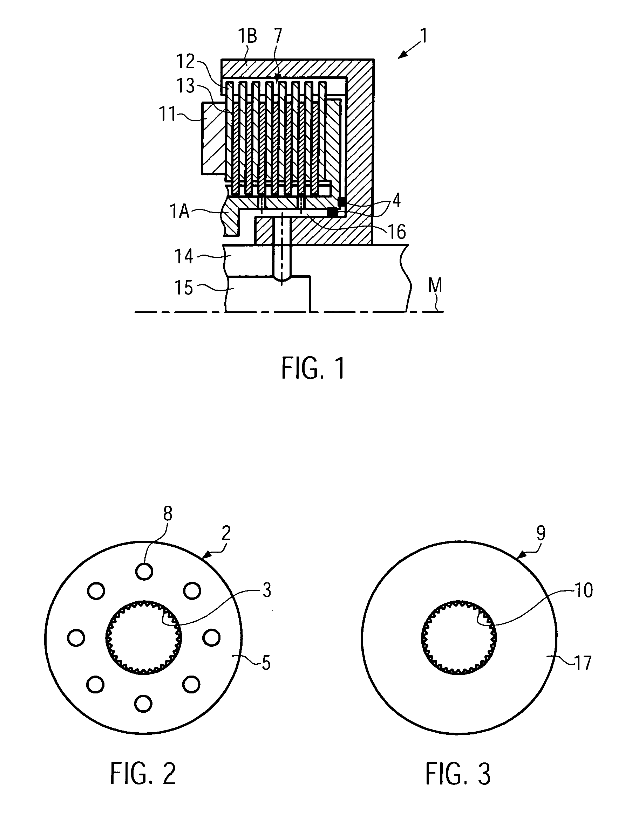

Die Darstellung der Fig. 1 verdeutlicht neben einem Innenlamellenträger 1A mit seinen Innenlamellen 13 ferner einen Außenlamellenträger 1B des Lamellenträgers der erfindungsgemäßen Lamellenkupplung 1, der Außenlamellen 12 lagert.

Ferner ist in dieser Darstellung, die nur den oberen Teil der Lamellenkupplung 1 oberhalb deren Mittellinie M zeigt, eine Welle 14 der Lamellenkupplung 1 dargestellt, die mit einer Kühlölzufuhreinrichtung 15 versehen ist, die Kühlöl in einen Raum 16 zwischen dem Innenlamellenträger 1A und dem Außenlamellenträger 1B einführt. Wie Fig. 1 verdeutlicht, ist bei dieser Ausführungsform der Dichtring 4 zwischen dem Innenlamellenträger 1A und dem Außenlamellenträger 1B angeordnet, wobei die Fig. 1 zwei alternative Anordnungsmöglichkeiten umfangs- und stirnseitig verdeutlicht, die im Bedarfsfalle auch beide vorgesehen sein können. Mit anderen Worten ist es möglich, nur einen Dichtring 4 umfangsseitig oder stirnseitig, wie aus Fig. 1 im Einzelnen entnehmbar, zwischen dem Innenlamellenträger 1A und dem Außenlamellenträger 1B vorzusehen, oder eben zwei derartige Dichtringe 4, wie sich dies aus Fig. 1 ergibt. Fig. 1 zeigt hierbei dementsprechend eine Abdichteinrichtung zwischen dem Innenlamellenträger 1A und dem Außenlamellenträger 1B, bei der eine Aktuatorik in Form des Kolbens 11 vorgesehen ist, der mit dem Innenlamellenträger 1A rotiert.

In Fig. 2 ist ein Beispiel für einen Lamellentyp 2 dargestellt, der eine Außenlamelle 12 und/oder eine Innenlamelle 13 gemäß Fig. 1 bilden kann. Dieser Lamellentyp 2 stellt eine Lamelle mit verminderter Verdrehsteifigkeit dar. Hierzu sind im Beispielsfalle Bohrungen 8 im Lamellenkörper angebracht, die zwischen der Innenverzahnung 3 und der Reibfläche 5 des Lamellentyps 2 angeordnet sind. Repräsentativ für sämtliche Bohrungen ist in Fig. 2 eine dieser Bohrungen mit der Bezugsziffer 8 gekennzeichnet. Die Anzahl der Bohrungen hängt von der zu erzielenden Verminderung der Verdrehsteifigkeit ab.

Demgegenüber zeigt Fig. 3 einen zweiten Lamellentyp 9, der ebenfalls als Außenlamelle 12 und/oder Innenlamelle 13 gemäß Fig. 1 Verwendung finden kann. Dieser Lamellentyp weist ebenfalls eine Innenverzahnung 10 und eine außenliegende Reibfläche 17 auf, ist in seiner Verdrehsteifigkeit jedoch nicht gemindert.

Wie eingangs erläutert, können diese Lamellentypen 2 und 9 beispielsweise abwechselnd im Lamellenpaket 7 oder gebündelt angeordnet werden. Mit anderen Worten ist es möglich, eine an den jeweiligen Anwendungsfall anpassbare Anordnung dieser beiden Lamellentypen 2 bzw. 9 im Lamellenpaket 7 zur Erreichung der eingangs erläuterten Schwingungsdämpfung vorzunehmen.

Neben der voranstehenden schriftlichen Offenbarung der Erfindung wird hiermit explizit auf deren zeichnerische Darstellung in den Fig. 1 bis 3 Bezug genommen.

### Bezugszeichenliste

- 1: Lamellenkupplung bzw. Lamellenbremse
- 1A: Innenlamellenträger } Lamellenträger
- 1B: Außenlamellenträger
- 2: erster Lamellentyp
- 3: Innenverzahnung
- 4: Dichtring/Elastomerring
- 5: Reibfläche
- 6: --
- 7: Lamellenpaket
- 8: Bohrungen
- 9: zweiter Lamellentyp
- 10: Innengewinde
- 11: Kolben
- 12: Außenlamellen
- 13: Innenlamellen
- 14: Welle
- 15: Kühlölzufuhreinrichtung
- 16: Raum
- 17: Reibfläche

## Patentansprüche

1. Lamellenkupplung (1)
- mit einem Lamellenpaket (7), das an einem Lamellenträger (1A, 1B) angeordnet ist und eine Mehrzahl von Lamellen (12, 13) aufweist,
**dadurch gekennzeichnet,**
- **dass** die Lamellen (12, 13) unterschiedliche Verdrehsteifigkeiten aufweisen.

2. Lamellenkupplung nach Anspruch 1, **dadurch gekennzeichnet, dass** die Lamellen (12, 13) des Lamellentyps (2) mit verminderter Verdrehsteifigkeit Bohrungen (8) zwischen einer Drehmomentübergabestelle (Verzahnung, Nocken, etc.) (3) und einer Reibfläche (5) zur Verminderung der Verdrehsteifigkeit aufweisen.

3. Lamellenkupplung nach Anspruch 1, **dadurch gekennzeichnet, dass** die Lamellen (12, 13) des Lamellentyps (2) mit verminderter Verdrehsteifigkeit Umformungen zwischen einer Drehmomentübergabestelle (Verzahnung, Nocken, etc.) (3) und einer Reibfläche (5) zur Verminderung der Verdrehsteifigkeit aufweisen.

4. Lamellenkupplung nach Anspruch 1, **dadurch gekennzeichnet, dass** die Lamellen (12, 13) des Lamellentyps (2) mit verminderter Verdrehsteifigkeit Materialzugaben zwischen einer Drehmomentübergabestelle (Verzahnung, Nocken, etc.) (3) und einer Reibfläche (5) zur Verminderung der Verdrehsteifigkeit aufweisen.

5. Lamellenkupplung nach Anspruch 1 bis 4, **dadurch gekennzeichnet, dass** die Lamellen (12, 13) mit unterschiedlichen Verdrehsteifigkeiten abwechselnd im Lamellenpaket (7) angeordnet sind.

6. Lamellenkupplung nach Anspruch 1 oder 4, **dadurch gekennzeichnet, dass** die Lamellen (12, 13) in unterschiedlicher Verdrehsteifigkeit, gebündelt im Lamellenpaket (7), angeordnet sind.
